# EUROPÄISCHE PATENTANMELDUNG

(11) **EP 0 713 188 A2**
(43) Veröffentlichungstag der Anmeldung: **22.05.1996**
(21) Anmeldenummer: 95117966.2
(22) Anmeldetag: 15.11.1995
(51) Int. Cl.: G06K 7/00

(54) **Verfahren und Chipkarte zum Dokumentieren einer erworbenen Berechtigung**

(30) Priorität: 18.11.1994 DE 4441038
(71) Anmelder: Deutsche Telekom AG, D-53105 Bonn (DE)
(72) Erfinder: Hartleif, Siegfried, D-64823 Gross-Umstadt (DE)

(57) **Zusammenfassung**

Bei einem Verfahren zum Dokumentieren einer erworbenen Berechtigung ist vorgesehen, daß Daten, welche die erworbene Berechtigung darstellen, im Speicher einer Chipkarte abgelegt werden. Dabei kann eine Bezahlung der Berechtigung durch eine Börsenfunktion, durch eine Kreditkartenfunktion der Chipkarte oder unabhängig von der Chipkarte erfolgen. Eine Überprüfung des Berechtigungsnachweises ist leicht möglich. Eine geeignete Chipkarte wird ebenfalls vorgeschlagen.

## Beschreibung

Die Erfindung betrifft ein Verfahren und eine Chipkarte zum Dokumentieren einer erworbenen Berechtigung.

Im täglichen Leben werden häufig Berechtigungen erworben, die in Papierform dokumentiert werden. Beispiele dafür sind die Berechtigung zur Benutzung von Verkehrsmitteln in Form von Fahrscheinen und Zeitkarten, die Benutzung von Parkplätzen in Form von Parkscheinen. Ferner sind in diesem Zusammenhang Eintrittskarten für kulturelle oder sportliche Veranstaltungen, Schwimmbäder, Museen und andere Einrichtungen zu nennen. In den meisten Fällen wird ein solcher Beleg lediglich zu Kontrollzwecken verwendet, der vom Kunden nach Gebrauch fortgeworfen wird. Einige dieser Belege sind so klein, daß sie leicht verloren gehen können. Bei manchen Gelegenheiten, beispielsweise auf Reisen, werden verschiedene Belege mitgeführt, so daß bei einer Kontrolle die Suche nach dem richtigen Beleg Schwierigkeiten bereiten kann.

Der Erfindung liegt die Aufgabe zugrunde, ein Dokumentieren einer erworbenen Berechtigung ohne einen Papierbeleg zu ermöglichen, was in Sonderfällen, beispielsweise für Abrechnungszwecke, jedoch nicht ausgeschlossen sein soll.

Diese Aufgabe wird bei dem erfindungsgemäßen Verfahren dadurch gelöst, daß Daten, welche die erworbene Berechtigung darstellen, im Speicher einer Chipkarte abgelegt werden. Dabei wird die Dokumentation besonders fälschungssicher, wenn gemäß einer Weiterbildung der Erfindung eine Übertragung der die Berechtigung darstellenden Daten von einer Einrichtung eines Berechtigungsgebers zur Chipkarte gesichert erfolgt. Dabei kann ein wesentlicher Vorteil der Chipkarten genutzt werden, daß nämlich Daten im Chip fälschungssicher gespeichert und fälschungssicher ausgelesen werden können.

Da die Erstellung von Belegen, wie Fahrscheinen, Parkscheinen und Eintrittskarten meist ohnehin mit computergesteuerten Druckern erfolgt, setzt das erfindungsgemäße Verfahren keinen höheren Aufwand beim Vorgang des Dokumentierens voraus. Es tritt sogar eine Ersparnis dadurch ein, daß Lese- und Schreibgeräte für Chipkarten weniger Wartung und kein Verbrauchsmaterial gegenüber Druckern benötigen. Der Kunde braucht lediglich eine Chipkarte mit sich zu führen.

Das erfindungsgemäße Verfahren kann an sich in Verbindung mit Barzahlung durchgeführt werden. So kann beispielsweise mit dem erfindungsgemäßen Verfahren ein "Fahrschein" dadurch erworben werden, daß der Kunde an einem Schalter seinen Wunsch äußert und bezahlt, worauf der Verkäufer über eine Tastatur die notwendigen Daten eingibt, die dann im Speicher der Chipkarte abgelegt werden. Ähnliches gilt für die Barzahlung an einem Automaten und für bargeldlose Zahlung.

Wesentliche Vorteile bringt jedoch das erfindungsgemäße Verfahren im Zusammenhang mit verschiedenen bargeldlosen Zahlungsformen, worauf Weiterbildungen des erfindungsgemäßen Verfahrens gerichtet sind.

Eine dieser Weiterbildungen besteht darin, daß eine für den Erwerb der Berechtigung erforderliche Bezahlung durch Abbuchung von einem in dem Speicher der Chipkarte abgelegten Guthaben erfolgt. Diese Weiterbildung ist in erster Linie zur Bezahlung sogenannter niedrigpreisiger Berechtigungen vorteilhaft, wie beispielsweise Fahrten im öffentlichen Personen-Nahverkehr. Das Guthaben wird in an sich bekannter Weise durch Verbindung mit einer Bank oder Verrechnungsstelle aufgefüllt. Solche Systeme sind beispielsweise unter dem Namen elektronische Kleingeldbörse bekanntgeworden.

Im einzelnen kann bei dieser Weiterbildung vorgesehen sein, daß zum Erwerb der Berechtigung die Chipkarte in eine Einrichtung des Berechtigungsgebers eingeführt wird, daß eine gegenseitige Authentifikation zwischen der Einrichtung des Berechtigungsgebers und der Chipkarte erfolgt, daß die Höhe des Guthabens und gegebenenfalls die Gültigkeit der Chipkarte geprüft wird und daß nach der kryptographisch gesicherten Abbuchung die die Berechtigung darstellenden Daten in kryptographisch gesicherter Form zur Chipkarte übertragen und im Speicher abgelegt werden.

Die Einrichtung des Berechtigungsgebers kann beispielsweise ein Fahrscheinautomat sein, wobei der Berechtigungsgeber ein Verkehrsunternehmen, ein Reisebüro oder ein sonstiger Vermittler sein kann.

Ist bei dieser Weiterbildung das Guthaben durch Bezahlung bei dem jeweiligen Berechtigungsgeber aufgefüllt worden, erübrigt sich eine weitere Verrechnung. Eine Auffüllung des Guthabens kann unabhängig vom Berechtigungsgeber, beispielsweise bei einem Börsenbetreiber, erfolgen, wobei der Betrag einem Poolkonto gutgeschrieben wird, über das der Börsenbetreiber die Ausgaben und Einnahmen abrechnet. Zur Abrechnung zwischen dem Berechtigungsgeber und dem Börsenbetreiber kann dann vorgesehen sein, daß mit der Abbuchung vom im Speicher abgelegten Guthaben ein Verrechnungsdatensatz erzeugt wird, der über die Einrichtung des Berechtigungsgebers an eine Verrechnungsstelle für das Poolkonto übertragen wird.

Eine Weiterbildung zur bargeldlosen Bezahlung der Berechtigung besteht darin, daß zum Erwerb der Berechtigung die Chipkarte in eine mit einer Verrechnungsstelle verbundene Einrichtung eingeführt wird, daß nach einer gegenseitigen Authentifikation der Verrechnungsstelle und der Chipkarte eine Prüfung erfolgt, ob die Verrechnungsstelle mit dem Preis für die Berechtigung belastet werden kann, daß eine Belastung der Verrechnungsstelle erfolgt und daß nach der Belastung die die Berechtigung darstellenden Daten übertragen und im Speicher abgelegt werden.

Eine andere Weiterbildung zur bargeldlosen Bezahlung der Berechtigung besteht darin, daß zum Erwerb der Berechtigung die Chipkarte in eine Einrichtung des Berechtigungsgebers eingeführt wird, daß nach einer gegenseitigen Authentifikation zwischen dem Berechtigungsgeber und der Chipkarte und nach kryptographisch gesichertem Speichern der Berechtigung Identifikationsmerkmale der Chipkarte und der Preis der Berechtigung kryptographisch gesichert von der Chipkarte an die Einrichtung des Berechtigungsgebers übertragen werden und daß anhand dieser Daten später eine Verrechnung über eine Verrechnungsstelle erfolgt.

Diese beiden Weiterbildungen sind insbesondere beim Erwerb von höherpreisigen Berechtigungen, beispielsweise beim Erwerb von Flugscheinen oder Eisenbahnfahrscheinen für den Fernverkehr vorteilhaft. Die dazu erforderlichen Sicherungs- und Transferfunktionen sind im einzelnen bekannt und stehen auch zu Zwecken des erfindungsgemäßen Verfahrens zur Verfügung.

Der eingangs erwähnte Nachteil, eine Vielzahl von Papierbelegen aufbewahren zu müssen, wird bei einer Weiterbildung der Erfindung dadurch verhindert, daß im Speicher mehrere jeweils eine Berechtigung darstellende Datensätze ablegbar sind. Damit neue Datensätze eingeschrieben werden können, ohne daß eine aufwendige Verwaltung durch die Benutzer erforderlich ist, ist bei dieser Weiterbildung vorzugsweise vorgesehen, daß bei Erwerb einer neuen Berechtigung der jeweils älteste Datensatz überschrieben wird.

Diese Weiterbildung kann auch derart ausgebildet sein, daß die Datensätze Daten über die zeitliche Gültigkeit der jeweiligen Berechtigung enthalten und daß beim Erwerb einer neuen Berechtigung nur ein Datensatz einer bereits ungültig gewordenen Berechtigung überschrieben wird. Dadurch wird insbesondere berücksichtigt, daß Berechtigungen je nach ihrer Art längere Zeit Gültigkeit haben können. So wird beispielsweise hierbei verhindert, daß ein teurer Fahrschein für eine Fernreise mit der Bahn beim Erwerb eines S-Bahn-Fahrscheins überschrieben wird.

Bei Berechtigungen, die nicht ohne weiteres nach kurzer Zeit ungültig werden, erhebt sich die Frage einer Kontrolle darüber, in wieweit von der Berechtigung bereits Gebrauch gemacht worden ist. Dazu kann das erfindungsgemäße Verfahren derart ausgestaltet werden, daß zu den Datensätzen, welche Berechtigungen darstellen, Kontrolldaten ablegbar sind, die vorzugsweise Informationen über die Inanspruchnahme der Berechtigung enthalten. Dadurch kann beispielsweise wie bei gedruckten Fahrscheinen für eine einmalige Fahrt eine Entwertung vorgenommen werden, die eine nochmalige Inanspruchnahme der Berechtigung verhindert. Diese Kontrolldaten können auch zu einer teilweisen Entwertung verwendet werden, beispielsweise bei jedem Zutritt in ein Schwimmbad bei Benutzung einer Berechtigung für eine begrenzte Anzahl von Zutritten.

Eine andere Weiterbildung des erfindungsgemäßen Verfahrens besteht darin, daß zum Überprüfen der Berechtigung die Daten, welche die erworbene Berechtigung darstellen, mit Hilfe einer, vorzugsweise tragbaren, Überprüfungseinrichtung gelesen und angezeigt werden. Dabei ist vorzugsweise vorgesehen, daß mit den Daten gespeicherte Sicherungscodes ebenfalls ausgelesen und zusammen mit den Daten auf Echtheit geprüft werden.

Die erfindungsgemäße Aufgabe wird bei einer Chipkarte zum Dokumentieren mindestens einer erworbenen Berechtigung mit einem Speicher, dadurch gelöst, daß in der Chipkarte Mittel zur Authentifikation und zur Verwaltung des Speichers vorhanden sind und daß im Speicher mindestens ein Datensatz ablegbar ist, der eine erworbene Berechtigung darstellt. Die Mittel zur Authentifikation und zur Verwaltung des Speichers können dabei von einem entsprechend programmierten Mikrocomputer oder von einem sogenannten intelligenten Speicherchip gebildet sein.

Für eine bargeldlose Bezahlung der Berechtigung kann bei dieser Chipkarte vorgesehen sein, daß im Speicher ferner Daten ablegbar sind, die ein Guthaben darstellen, das bei Speicherung eines eine Berechtigung darstellenden Datensatzes um den Preis der Berechtigung vermindert wird. Dieses hat unter anderem den Vorteil, daß beim Erwerb einer Berechtigung die jeweilige Einrichtung des Berechtigungsgebers, beispielsweise der Fahrscheinautomat, nicht gleichzeitig mit einer Verrechnungsstelle verbunden sein muß.

Vorzugsweise sind bei dieser Weiterbildung der erfindungsgemäßen Chipkarte für eine Authentifikation gegenüber Einrichtungen zur Veränderung des Guthabens und für eine Authentifikation zur Prüfung der Berechtigung voneinander unabhängige Authentifikations-Daten abgelegt. Dadurch werden die jeweiligen Authentifikations-Daten bzw. Algorithmen nur auf die zur Durchführung der jeweiligen Funktion vorgesehenen Stellen beschränkt.

Eine andere Weiterbildung der erfindungsgemäßen Chipkarte ermöglicht ein Abbuchen des Preises für die Berechtigungen von einem Konto des Inhabers dadurch, daß inhaberbezogene Datensätze im Speicher ablegbar sind und daß zur Authentifikation gegenüber Einrichtungen, welche die abgelegten inhaberbezogenen Daten lesen und/oder verändern können, Authentifikations-Daten abgelegt sind, die von anderen abgelegten Authentifikations-Daten unabhängig sind.

Eine besonders vielfältige Möglichkeit der Anwendung der erfindungsgemäßen Chipkarte wird durch eine andere Weiterbildung dadurch ermöglicht, daß für mehrere Berechtigungsgeber jeweils mindestens ein Datensatz, der eine Berechtigung darstellt, ablegbar ist, daß für jeden Berechtigungsgeber eigene Authentifikations-Daten abgelegt sind und daß Mittel vorgesehen sind, die einen Zugriff auf Datensätze eines anderen Berechtigungsgebers verhindern.

Eine solche Karte ersetzt eine größere Zahl von leicht zu verlierenden Belegzetteln und kann beispielsweise für unterschiedliche Service-Anbieter einer Stadt genutzt werden, beispielsweise für den öffentlichen Personen-Nahverkehr, und für sportliche und kulturelle Einrichtungen.

Für Berechtigungen, welche durch Inanspruchnahme in irgendeiner Weise verbraucht werden, kann bei der erfindungsgemäßen Chipkarte vorgesehen sein, daß den abgelegten Datensätzen, welche Berechtigungen darstellen, Kontrolldaten hinzufügbar sind. Diese können beispielsweise von einem Fahrscheinkontrolleur oder durch einen Zugangsautomaten eingegeben werden.

Ausführungsbeispiele der Erfindung sind in der Zeichnung anhand mehrerer Figuren dargestellt und in der nachfolgenden Beschreibung näher erläutert. Es zeigt:
- Fig. 1: die Architektur des variablen Speicherbereiches einer erfindungsgemäßen Chipkarte,
- Fig. 2: den Ablauf beim Erwerb einer Berechtigung am Beispiel eines Fahrscheins und
- Fig. 3: den Ablauf einer Überprüfung am Beispiel des Fahrscheins.

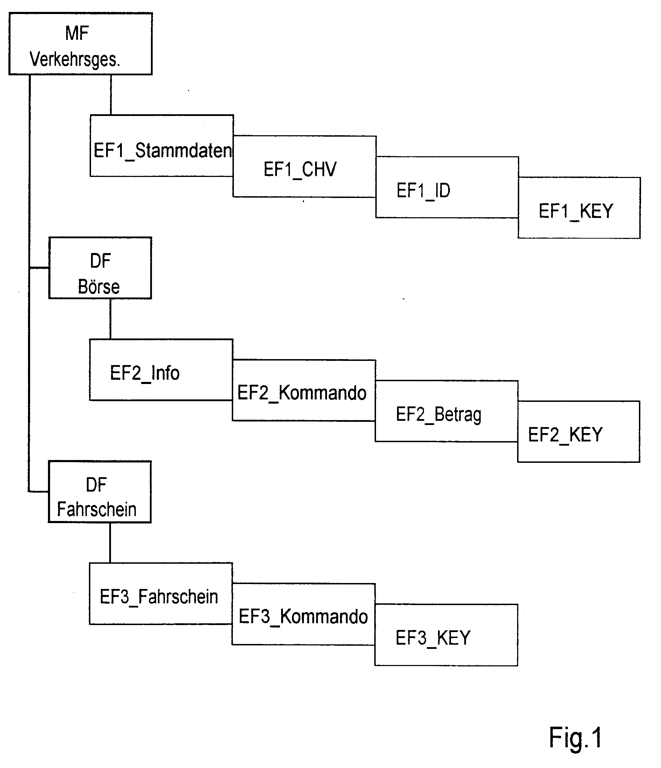

Die in Fig. 1 dargestellte Architektur enthält ein Hauptverzeichnis MF, dem einzelne Datenfelder EF1 zugeordnet sind, die allgemein gültige Daten enthalten. Im Datenfeld EF1_Stammdaten sind die Kundendaten des Dateninhabers eingetragen, wie beispielsweise Namen, Adresse und Kundennummer. Im Datenfeld EF1_CHV befindet sich die persönliche Geheimnummer des Kunden. Das Datenfeld EF_ID enthält eine Identifikationsnummer der Chipkarte. Schließlich sind im Datenfeld EF1_KEY Authentifikations-Daten abgelegt. Ausgehend vom Hauptverzeichnis MF sind zwei Unterverzeichnisse DF Börse und DF Fahrschein angeordnet, die die einzelnen Anwendungen bzw. die dazugehörigen Funktionen und Datenfelder beinhalten. Das Unterverzeichnis DF Börse beinhaltet ein Datenfeld EF2_Info, ein Datenfeld EF2_Kommando, ein Datenfeld EF2_Betrag und ein Datenfeld EF2_KEY. Letzteres enthält Authentifikations-Daten. Das Datenfeld EF2_Kommando enthält Routinen zur Ausführung von Befehlen, die von außen eintreffen, wie beispielsweise Reduzierung oder Erhöhung des im Datenfeld EF2_Betrag gespeicherten Betrages.

Das Unterverzeichnis DF Fahrschein enthält Datenfelder EF3_Fahrschein, EF3_Kommando und EF3_KEY, wobei das erstgenannte zur Speicherung der Daten des Fahrscheins dient, wie beispielsweise Start und Ziel, Preis, Gültigkeitsdauer. Die weiteren Datenfelder des Unterverzeichnisses DF Fahrschein dienen den bereits im Zusammenhang mit dem Unterverzeichnis DF Börse erläuterten Zwecken.

Wie bereits erwähnt, kann eine erfindungsgemäße Chipkarte für eine größere Anzahl von Anwendungen eingerichtet sein, wozu eine Architektur gemäß Fig. 1 durch weitere Unterverzeichnisse erweitert werden kann, beispielsweise um ein Unterverzeichnis für Eintrittskarten zu Veranstaltungen. Gegenüber dem in Fig. 1 dargestellten Ausführungsbeispiel kann bei einer anderen erfindungsgemäßen Chipkarte das Unterverzeichnis DF Börse mit den zugehörigen Datenfeldern auch fehlen. Eine solche Chipkarte kann durch Abbuchung des Preises für die jeweilige Berechtigung - beispielsweise von einem Bankkonto - benutzt werden.

Für Anwendungen, bei denen weder zum Auffüllen des Guthabens noch zum Erwerb einer Berechtigung eine Identifizierung des Inhabers erforderlich ist, werden die Datenfelder des Hauptverzeichnisses nicht benötigt. Eine Chipkarte, die nur das Unterverzeichnis DF Fahrschein oder ähnliche einen Berechtigungsnachweis verwaltende Unterverzeichnisse enthält, könnte immerhin noch dazu benutzt werden, einen Fahrschein oder einen anderen Berechtigungsnachweis gegen Barzahlung oder eine andere von der Chipkarte unabhängige Zahlungsweise zu erwerben und dabei den Berechtigungsnachweis speichern zu lassen.

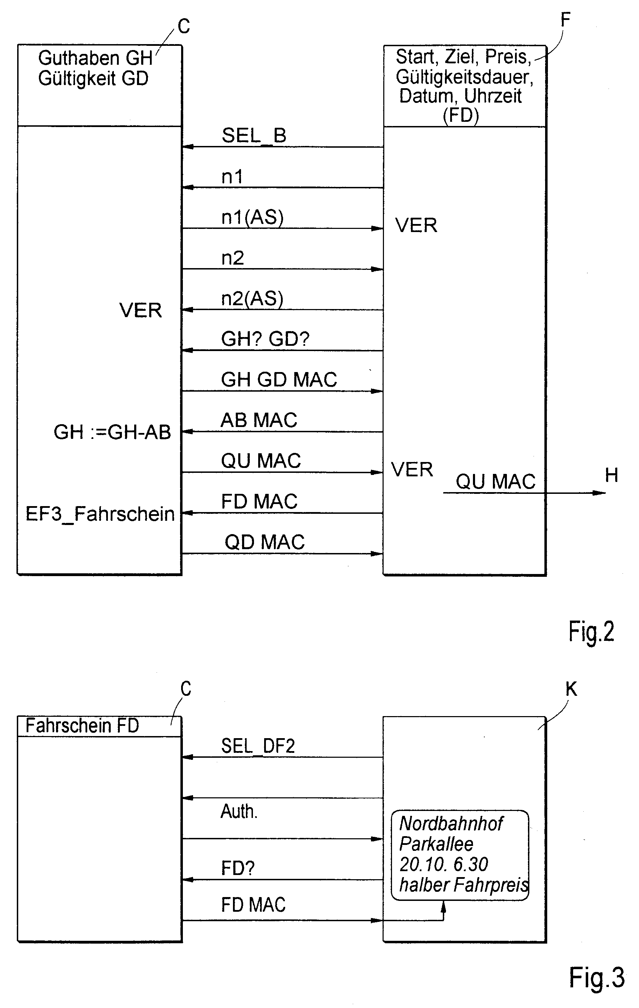

Fig. 2 stellt den Ablauf des Datenaustausches zwischen einer Chipkarte C und einem Fahrscheinautomaten F sowie einige Datenverarbeitungsschritte dar. Auf der Chipkarte C sind unter anderem ein Guthaben GH und ein Gültigkeitsdatum GD gespeichert. In nicht näher dargestellter Weise wählt der Kunde am Fahrscheinautomaten das vorgegebene Fahrziel, gegebenenfalls auch die vorgesehene Abfahrtszeit. Daraufhin zeigt der Fahrscheinautomat dem Kunden den Fahrpreis an. Je nach zugrundeliegendem Tarifsystem sind noch weitere Eingaben zu tätigen, nach deren Abschluß die zum Ausstellen eines Fahrscheins erforderlichen Daten im Fahrscheinautomaten vorliegen. Dieses sind beispielsweise Start und Ziel, Preis, Gültigkeitsdauer, Datum und Uhrzeit und werden im folgenden Fahrscheindaten genannt.

Nach dem Einführen der Chipkarte C sendet der Fahrscheinautomat F an die Chipkarte einen Befehl SEL_B, um in der Chipkarte die Anwendung "vorausbezahlte Börse" zu selektieren. Danach sendet der Fahrscheinautomat F eine Zufallszahl n1 an die Chipkarte und erhält diese Zufallszahl mit dem Authentifikations-Schlüssel AS verschlüsselt zurück. Der Fahrscheinautomat rechnet das somit von der Chipkarte erhaltene Kryptogramm nach und verifiziert (VER) somit die Authentizität der Chipkarte C.

In gleicher Weise überzeugt sich die Chipkarte von der Echtheit des Fahrscheinautomatens durch Senden einer Zufallszahl n2, Empfangen von n2 (AS) und Verifizieren VER.

Im Anschluß daran folgt eine Abfrage vom Fahrscheinautomaten F nach dem Guthaben GH und der Gültigkeit GD. Als Antwort erhält der Fahrscheinautomat F die entsprechenden Daten GH und GD einschließlich eines MACs (message authentification code), der verhindert, daß der Betrag und/oder das Gültigkeitsdatum auf der Schnittstelle zur Chipkarte manipuliert werden.

Der nächste Schritt besteht im Senden eines ebenfalls mit einem MAC versehenen Abbuchungsbefehls ABMAC. Die Chipkarte reduziert daraufhin den im Datenfeld EF2_Betrag (Fig. 1) eingetragenen Betrag GH um den abzubuchenden Betrag AB und sendet als Antwort eine MAC-gesicherte Quittung QUMAC an den Fahrscheinautomaten F. Der Fahrscheinautomat verifiziert die empfangene Quittung QUMAC und schickt diese als Verrechnungsdatensatz weiter an ein nicht dargestelltes Hintergrundsystem H, das eine weitere Verrechnung vornimmt. Diese führt letztlich zu einer Gutschrift auf einem Konto des Automatenbetreibers sowie zu einer Lastschrift auf dem Konto des Betreibers der Börse auf der Chipkarte, beispielsweise der Bank des Chipkarten-Inhabers.

Damit ist der Bezahlvorgang abgeschlossen und der Fahrscheinautomat lädt den elektronischen Fahrschein in das dafür vorgesehene Datenfeld der Chipkarte. Die dazu erforderlichen Daten FD werden wiederum MAC-gesichert zur Chipkarte C übertragen und im Datenfeld EF3_Fahrschein abgelegt. Dieser Vorgang wird mit QFMAC dem Fahrscheinautomaten F gegenüber quittiert.

Bei einer Fahrscheinkontrolle wird die Chipkarte in ein vorzugsweise tragbares Überprüfungsgerät K eingeführt. Nach einer Selektion der Anwendung "Fahrschein" mit einem Befehl SEL_DF2 und einer gegenseitigen Authentifikation wie beim Erwerb des Fahrscheins, die in Fig. 3 nur durch zwei Pfeile dargestellt ist, werden die Fahrscheindaten FD vom Überprüfungsgerät K angefordert, aus dem Datenfeld EF3_Fahrschein ausgelesen, zum Überprüfungsgerät übertragen und dort angezeigt. Als Beispiel zeigt das Display in Fig. 3 die Daten eines Fahrscheins, der für eine Fahrt vom Nordbahnhof bis zur Parkallee gilt und am 20.10. um 6.30 zum halben Fahrpreis gelöst wurde. Damit kann ein Kontrolleur die Gültigkeit des Fahrscheins überprüfen. Eine Überprüfung, ob die Fahrscheindaten manipuliert wurden, ist anhand des MACs möglich.

## Patentansprüche

1. Verfahren zum Dokumentieren einer erworbenen Berechtigung, dadurch gekennzeichnet, daß Daten, welche die erworbene Berechtigung darstellen, im Speicher einer Chipkarte abgelegt werden.

2. Verfahren nach Anspruch 1, dadurch gekennzeichnet, daß eine Übertragung der die Berechtigung darstellenden Daten von einer Einrichtung eines Berechtigungsgebers zur Chipkarte gesichert erfolgt.

3. Verfahren nach einem der Ansprüche 1 oder 2, dadurch gekennzeichnet, daß eine für den Erwerb der Berechtigung erforderliche Bezahlung durch Abbuchung von einem in dem Speicher der Chipkarte abgelegten Guthaben erfolgt.

4. Verfahren nach Anspruch 3, dadurch gekennzeichnet, daß zum Erwerb der Berechtigung die Chipkarte in eine Einrichtung des Berechtigungsgebers eingeführt wird, daß eine gegenseitige Authentifikation zwischen der Einrichtung des Berechtigungsgebers und der Chipkarte erfolgt, daß die Höhe des Guthabens und gegebenenfalls die Gültigkeit der Chipkarte geprüft wird und daß nach der kryptographisch gesicherten Abbuchung die die Berechtigung darstellenden Daten in kryptographisch gesicherter Form zur Chipkarte übertragen und im Speicher abgelegt werden.

5. Verfahren nach Anspruch 4, dadurch gekennzeichnet, daß mit der Abbuchung vom im Speicher abgelegten Guthaben ein Verrechnungsdatensatz erzeugt wird, der über die Einrichtung des Berechtigungsgebers an eine Verrechnungsstelle übertragen wird.

6. Verfahren nach einem der Ansprüche 1 oder 2, dadurch gekennzeichnet, daß zum Erwerb der Berechtigung die Chipkarte in eine mit einer Verrechnungsstelle verbundene Einrichtung eingeführt wird, daß nach einer gegenseitigen Authentifikation zwischen der Verrechnungsstelle und der Chipkarte eine Prüfung erfolgt, ob die Verrechnungsstelle mit dem Preis für die Berechtigung belastet werden kann, daß eine Belastung der Verrechnungsstelle erfolgt und daß nach der Belastung die die Berechtigung darstellenden Daten übertragen und im Speicher abgelegt werden.

7. Verfahren nach einem der Ansprüche 1 oder 2, dadurch gekennzeichnet, daß zum Erwerb der Berechtigung die Chipkarte in eine Einrichtung des Berechtigungsgebers eingeführt wird, daß nach einer gegenseitigen Authentifikation zwischen dem Berechtigungsgeber und der Chipkarte und nach kryptographisch gesichertem Speichern der Berechtigung Identifikationsmerkmale der Chipkarte und der Preis der Berechtigung kryptographisch gesichert von der Chipkarte an die Einrichtung des Berechtigungsgebers übertragen werden und daß anhand dieser Daten später eine Verrechnung über eine Verrechnungsstelle erfolgt.

8. Verfahren nach einem der vorhergehenden Ansprüche, dadurch gekennzeichnet, daß im Speicher mehrere jeweils eine Berechtigung darstellende Datensätze ablegbar sind.

9. Verfahren nach Anspruch 8, dadurch gekennzeichnet, daß bei Erwerb einer neuen Berechtigung der jeweils älteste Datensatz überschrieben wird.

10. Verfahren nach einem der Ansprüche 8 oder 9, dadurch gekennzeichnet, daß die Datensätze Daten über die zeitliche Gültigkeit der jeweiligen Berechtigung enthalten und daß beim Erwerb einer neuen Berechtigung nur ein Datensatz einer bereits ungültig gewordenen Berechtigung überschrieben wird.

11. Verfahren nach einem der vorhergehenden Ansprüche, dadurch gekennzeichnet, daß zu den Datensätzen, welche Berechtigungen darstellen, Kontrolldaten ablegbar sind.

12. Verfahren nach Anspruch 11, dadurch gekennzeichnet, daß die Kontrolldaten Informationen über die Inanspruchnahme der Berechtigung enthalten.

13. Verfahren nach einem der vorhergehenden Ansprüche, dadurch gekennzeichnet, daß zum Überprüfen der Berechtigung die Daten, welche die erworbene Berechtigung darstellen, mit Hilfe einer, vorzugsweise tragbaren, Überprüfungseinrichtung gelesen und angezeigt werden.

14. Verfahren nach Anspruch 13, dadurch gekennzeichnet, daß mit den Daten gespeicherte Sicherungscodes ebenfalls ausgelesen und zusammen mit den Daten auf Echtheit geprüft werden.

15. Chipkarte zum Dokumentieren mindestens einer erworbenen Berechtigung mit einem Speicher, dadurch gekennzeichnet, daß in der Chipkarte Mittel zur Authentifikation und zur Verwaltung des Speichers vorhanden sind und daß im Speicher mindestens ein Datensatz ablegbar ist, der eine erworbene Berechtigung darstellt.

16. Chipkarte nach Anspruch 15, dadurch gekennzeichnet, daß im Speicher ferner Daten ablegbar sind, die ein Guthaben darstellen, das bei Speicherung eines eine Berechtigung darstellenden Datensatzes um den Preis der Berechtigung vermindert wird.

17. Chipkarte nach Anspruch 16, dadurch gekennzeichnet, daß für eine Authentifikation gegenüber Einrichtungen zur Veränderung des Guthabens und für eine Authentifikation zur Prüfung der Berechtigung voneinander unabhängige Authentifikations-Daten abgelegt sind.

18. Chipkarte nach einem der Ansprüche 15 bis 17, dadurch gekennzeichnet, daß inhaberbezogene Datensätze im Speicher ablegbar sind und daß zur Authentifikation gegenüber Einrichtungen, welche die abgelegten inhaberbezogenen Daten lesen und/oder verändern können, Authentifikations-Daten abgelegt sind, die von anderen abgelegten Authentifikations-Daten unabhängig sind.

19. Chipkarte nach einem der Ansprüche 15 bis 18, dadurch gekennzeichnet, daß für mehrere Berechtigungsgeber jeweils mindestens ein Datensatz, der eine Berechtigung darstellt, ablegbar ist, daß für jeden Berechtigungsgeber eigene Authentifikations-Daten abgelegt sind und daß Mittel vorgesehen sind, die einen Zugriff auf Datensätze eines anderen Berechtigungsgebers verhindern.

20. Chipkarte nach einem der Ansprüche 15 bis 19, dadurch gekennzeichnet, daß den abgelegten Datensätzen, welche Berechtigungen darstellen, Kontrolldaten hinzufügbar sind.
